# EUROPEAN PATENT APPLICATION

(11) **EP 2 615 849 A1**
(43) Date of publication of application: **17.07.2013**
(21) Application number: 13150678.4
(22) Date of filing: 09.01.2013
(51) Int. Cl.: H04N 21/472, H04N 21/4722, H04N 21/84

(54) **Image sound apparatus**

(30) Priority: 12.01.2012 JP 2012004114; 20.11.2012 JP 2012253917
(71) Applicant: Funai Electric Co., Ltd., Daito-shi Osaka 574-0013 (JP)
(72) Inventor: Nishida, Yusuke, Daito-shi Osaka 574-0013 (JP)
(74) Representative: Grünecker, Kinkeldey, Stockmair & Schwanhäusser

(57) **Abstract**

An image sound apparatus includes a reproduction processing portion which performs a reproduction process of reproduction information containing images or sound, a title acquiring portion which acquires a title of the reproduction information, a communication portion connected to a communication network so as to perform communication, and an operation portion which accepts an operation instruction. In addition, the image sound apparatus includes a reproduction information acquiring portion which acquires, when a predetermined operation to the operation portion is detected in a state where the reproduction processing portion is performing the reproduction process, the title of the reproduction information by the title acquiring portion, and acquires reproduction information having a title that is partially or completely the same as the acquired title from a communication network using the communication portion.

## Description

### BACKGROUND OF THE INVENTION

### Field of the Invention

The present invention relates to an image sound apparatus for reproducing images or sound, and particularly to an image sound apparatus having a function of acquiring information by connecting to a wide area communication network.

### Description of Related Art

Recent years, along with various functions and diversification of digital technology, various image sound apparatuses such as a hard disk drive (HDD) recorder or a digital versatile disc (DVD) recorder have become widespread. The image sound apparatus decodes image and sound digital data contained in a broadcast wave so as to output the image and sound signal to a television apparatus, a monitor, or a speaker.

In addition, recent years, there are common image sound apparatuses having various functions of not only receiving broadcast waves and storing data in HDD but also utilizing a wide area communication network such as the Internet so as to acquire and reproduce moving images.

For instance, there are commercialized image sound apparatuses having a program information acquiring function using an electronic program guide (EPG).
By using the EPG, it is possible to display a list of the program information. A user can use the program information displayed as a list, for example, titles and broadcasting date and time, so as to check contents of a broadcasting program or to make a reservation for viewing or recording a broadcasting program.

Concerning the above description, there are disclosed and proposed an Internet broadcasting system that searches for predetermined information from a viewer's terminal and acquires reproduction information belonging to the information via the Internet, and a program guide system that provides a program list available via a network to users (see, for example, Patent Documents 1 and 2).
[Patent Document 1] JP-A-2003-296595
[Patent Document 2] JP-A-2009-182985

However, in the above-mentioned techniques, reproduction information such as a broadcasting program can be acquired via a wide area communication network such as the Internet, but it is necessary for acquiring the reproduction information to search for reproduction information desired by a user, to check the search result, and to select the reproduction information from the search result.

### SUMMARY OF THE INVENTION

The present invention is made in view of the above-mentioned problem, and it is an object thereof to provide an image sound apparatus having a function of connecting to a wide area communication network so as to acquire reproduction information, which can acquire and reproduce the reproduction information by a simple operation.

In order to achieve the above-mentioned object, an image sound apparatus of the present invention includes a reproduction processing portion for performing a reproduction process of reproduction information including images or sound, a title acquiring portion for acquiring a title of the reproduction information, a communication portion configured to connect to a communication network for performing communication, an operation portion for accepting operation instructions, and a reproduction information acquiring portion for acquiring the title of the reproduction information by the title acquiring portion when a predetermined operation to the operation portion is detected in a state where the reproduction processing portion is performing the reproduction process, so as to acquire reproduction information having a title that is partially or completely the same as the acquired title from a communication network using the communication portion.

In addition, in order to achieve the above-mentioned object, in the image sound apparatus of the present invention, when a predetermined operation to the operation portion is detected in a state where the reproduction processing portion is performing the reproduction process, the reproduction information acquiring portion acquires the title of the reproduction information by the title acquiring portion, and acquires reproduction information having a title that is partially or completely the same as the acquired title and having different management information from that of the reproduction information, from a communication network using the communication portion.

In addition, in order to achieve the above-mentioned object, the reproduction information acquiring portion uses information as the management information, indicating the number of topics of the reproduction information, a subtitle of the reproduction information, or broadcast date and time of the reproduction information.

In addition, in order to achieve the above-mentioned object, in the image sound apparatus of the present invention, when acquisition of the reproduction information is succeeded, the reproduction information acquiring portion controls the reproduction processing portion to perform automatic reproduction of the acquired reproduction information, or accepts selection of whether or not to reproduce the acquired reproduction information from the operation portion so as to control the reproduction processing portion to reproduce the reproduction information when the reproduction is selected.

In addition, in order to achieve the above-mentioned object, the image sound apparatus of the present invention further includes a broadcast reception portion for receiving a broadcast wave so as to acquire the reproduction information from the broadcast wave. In addition, when a predetermined operation to the operation portion is detected in a state where the broadcast reception portion is acquiring the reproduction information, the reproduction information acquiring portion acquires the title of the reproduction information from the title acquiring portion and acquires reproduction information having a title that is partially or completely the same as the acquired title, from a communication network using the communication portion.

In addition, in order to achieve the above-mentioned object, the image sound apparatus of the present invention further includes a recording portion for recording the reproduction information. In addition, when a predetermined operation to the operation portion is detected in a state where a recording process of the reproduction information to the recording portion is performed, the reproduction information acquiring portion acquires the title of the reproduction information from the title acquiring portion and acquires reproduction information having a title that is partially or completely the same as the acquired title, from a communication network using the communication portion.

In addition, in order to achieve the above-mentioned object, when a predetermined operation to the operation portion is detected in a state where a reproduction process of the reproduction information recorded in the recording portion or a predetermined recording medium is being performed, the reproduction information acquiring portion acquires the title of the reproduction information from the title acquiring portion and acquires reproduction information having a title that is partially or completely the same as the acquired title, from a communication network using the communication portion.

In addition, in order to achieve the above-mentioned object, in the image sound apparatus of the present invention, the reproduction information acquiring portion uses the communication portion for connecting to an information delivery system delivering the reproduction information via a wide area communication network, so as to acquire the reproduction information.

In addition, in order to achieve the above-mentioned object, the image sound apparatus of the present invention further includes an electronic program guide acquiring portion which acquires an electronic program guide. In addition, the title information acquiring portion uses the electronic program guide so as to acquire the title information.

In addition, in order to achieve the above-mentioned object, in the image sound apparatus of the present invention, the title information acquiring portion uses the communication portion so as to acquire the title information from an information processing apparatus configured to connect to the communication network.

In addition, in order to achieve the above-mentioned object, an image sound apparatus of the present invention includes a reproduction processing portion which performs a reproduction process of reproduction information containing images or sound recorded in an optical disc, a title acquiring portion which acquires the title of the reproduction information from the optical disc, a communication portion configured to connect to a communication network so as to perform communication, an operation portion which accepts an operation instruction, and a reproduction information acquiring portion which, when a predetermined operation to the operation portion is detected, acquires the title of the reproduction information recorded in the optical disc from the title acquiring portion, and acquires information having a name that is partially or completely the same as the acquired title, from a communication network using the communication portion.

In addition, in order to achieve the above-mentioned object, in the image sound apparatus of the present invention, the reproduction information acquiring portion acquires inlbrmation having a name that is partially or completely the same as the title acquired by the title acquiring portion and having different management information from a communication network using the communication portion, and the reproduction information acquiring portion uses information as the management information, indicating the number of topics of the reproduction information, a subtitle of the reproduction information, or broadcast date and time of the reproduction information.

In addition, in order to achieve the above-mentioned object, in the image sound apparatus of the present invention, when acquisition of the information is succeeded, the reproduction information acquiring portion makes notification indicating the acquired information, accepts a selection of whether or not to reproduce the acquired information from the operation portion, and controls the reproduction processing portion to reproduce the information if the reproduction is selected.

As described above, according to the present invention, it is possible to acquire the reproduction information from the wide area communication network during a period while the reproduction information is being reproduced or recorded. Therefore, the user can acquire the reproduction information of the same title from the wide area communication network and can view the reproduction information from the beginning by a simple operation. In addition, according to the present invention, it is possible to acquire information related to the reproduction information under reproduction or information related to the reproduction information recorded in the optical disc from the wide area communication network, and to inform the user. In addition, when the acquisition of the related information is succeeded, the user can promptly recognize the success and can reproduce the acquired information by a simple operation.

### BRIEF DESCRIPTION OF THE DRAWINGS

Fig. 1 is a block diagram illustrating a structure of functional portions of an image sound apparatus of the present invention.
Fig. 2 is a block diagram illustrating an internal structure of the image sound apparatus of the present invention.
Fig. 3 is a flowchart illustrating an acquisition and reproduction process of the present invention.
Fig. 4 is a screen diagram illustrating a confirmation screen output by the image sound apparatus of the present invention.
Fig. 5 is a screen diagram illustrating a confirmation screen output by the image sound apparatus of the present invention.
Fig. 6 is a screen diagram illustrating a confirmation screen output by the image sound apparatus of the present invention.
Fig. 7 is a flowchart illustrating the acquisition and reproduction process of the present invention.

### DETAILED DESCRIPTION OF THE PREFERRED EMBODIMENTS

Hereinafter, an embodiment of the present invention is described with reference to the drawings. Note that the embodiment described here is merely an example, and the present invention is not limited to the embodiment.

### (1. Internal structure)

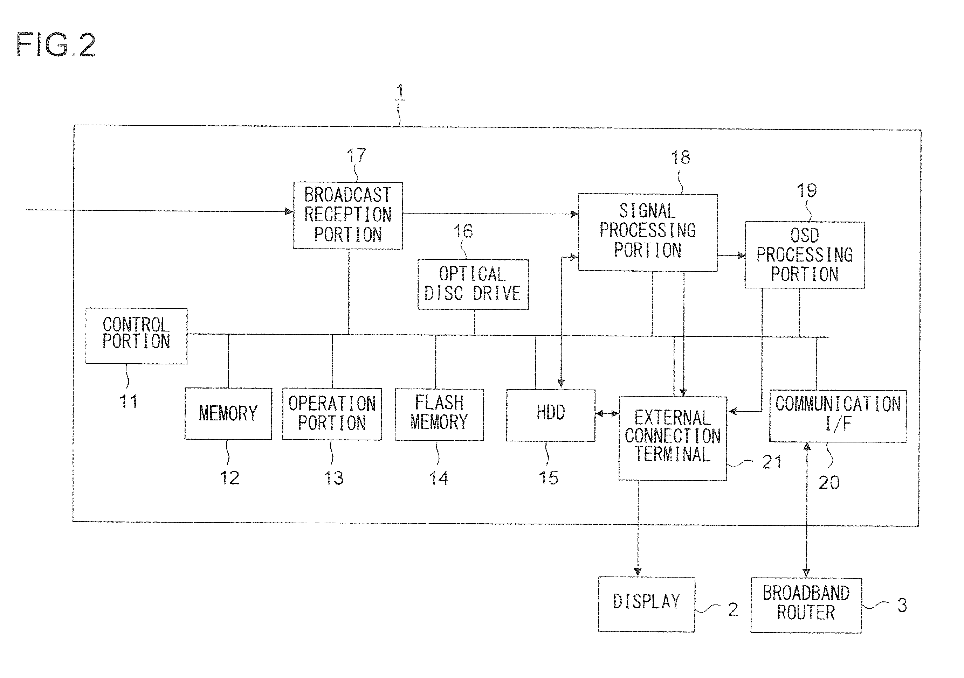

Fig. 2 is a block diagram illustrating an internal structure of an HDD recorder 1 (namely, the image sound apparatus) according to an embodiment of the present invention. Note that lines with arrow in Fig. 2 indicate flows of image/sound data. In addition, lines without arrow are communication bus lines for a control portion 11 to send and receive control signal or the like with respect to individual devices.

The HDD recorder 1 is constituted so as to include at least the control portion 11, a memory 12, an operation portion 13, a flash memory 14, an HDD 15 (namely, the recording portion), an optical disc drive 16, a broadcast reception portion 17, a signal processing portion 18 (namely, the reproduction processing portion), an on-screen display (OSD) processing portion 19, a communication interface (I/F) 20 (namely, the communication portion), and an external connection terminal 21. Note that there is a display 2 as a display device connected via the external connection terminal 21. In addition, there is a broadband router 3 as a communication device connected via the communication I/F 20.

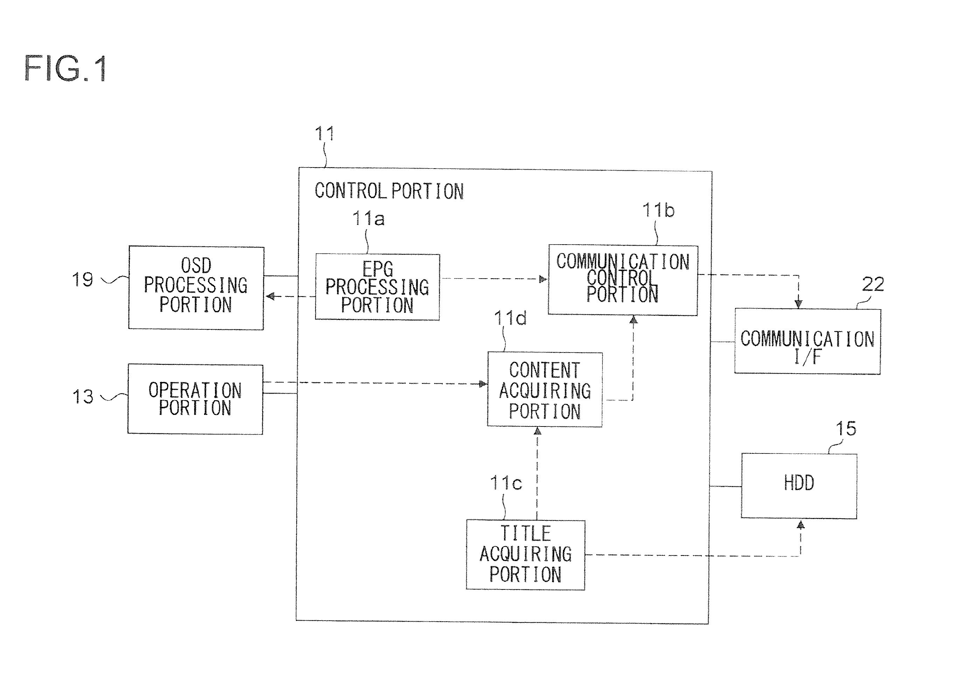

The control portion 11 controls drive of individual portions of the HDD recorder 1 so as to control a reproduction process, a recording process, an output process, and the like of images and sound, in a unified manner. The control portion 11 is constituted of a plurality of microprocessors, for example. In addition, the control portion 11 includes an EPG acquiring portion 11a to a content acquiring portion 11d (Fig. 1) that will be described later, as functional portions realized by executing a program on a processing unit of the control portion 11.

The memory 12 temporarily stores various data stored in the HDD recorder 1 and is constituted of a random access memory (RAM) or the like that can be written, for example. The memory 12 has a role as a buffer memory for temporarily storing processed data when the control portion 11 performs various types of information processing or instructions from a user, for example.

The operation portion 13 is used by a user for issuing an image/sound reproduction instruction or the like to the HDD recorder 1. The operation portion 13 includes, for example, a plurality of buttons provided to a housing of the HDD recorder 1, a remote controller device (not shown), and the like. The operation portion 13 receives a user's operation by these devices. When a user's operation is accepted, the control portion 11 performs the reproduction process, the recording process, and the like based on the operation content.

The flash memory 14 is one type of EEPROM, which is a ROM that can be written and erased by a user of the apparatus. Because the flash memory 14 can be written and erased in a mounted state on the circuit substrate, it is used for an application requiring rewriting in use, for example, for storing operation set data of the apparatus or information unique to the user.

The HDD 15 is a magnetic recording medium for recording digital data. In this embodiment, the HDD 15 is used mainly for storing record data generated from image/sound data (namely, reproduction information) contained in a broadcast wave, and compressed record data generated in a compression process.

The optical disc drive 16 is an optical device for optically reading various data from an optical disc such as a compact disc (CD) medium or a digital versatile disc (DVD) medium. The optical disc drive 16 controls an optical pickup (not shown) so as to project a light beam to the optical disc for reading various information such as sound information and image information recorded in the optical disc. In this case, the optical disc drive 16 performs various controls of the optical pickup such as drive control, focus control, and tilt control.

The broadcast reception portion 17 is connected to an external antenna (not shown) so as to perform tuning of a digital/analog broadcasting station, reception, frequency conversion, amplification, demodulation, and the like. The broadcast reception portion 17 is constituted so as to include, in a case of an analog system, an analog tuner, an image intermediate frequency amplifying circuit, a demodulation circuit, an amplifying circuit, and the like. In addition, in a case of a digital system, the broadcast reception portion 17 is constituted so as to include a digital tuner, an error correction portion, and the like.

For instance, when a digital broadcast is received, the digital tuner of the broadcast reception portion 17 performs amplification and detection of the intermediate frequency signal. Thus, a transport stream (TS) is acquired, which is a digital signal of MPEG2 system. Note that the TS is obtained by splitting a sound packetized elementary stream (PES), an image PES, and additional information of a plurality of contents (programs) into fixed-length TS packets and linking them together. The TS is given to the signal processing portion 18 and is converted into an image/sound signal. Note that it is possible to record the TS in the HDD 15 without converting the same.
In this case, the signal processing portion 18 only transmits through the TS.

The signal processing portion 18 is a multiple separator portion that receives the TS generated by the broadcast reception portion 17 or digital data read from the optical disc by the optical disc drive 16, and separates the same into a sound digital signal containing sound information and an image digital signal containing image information. Specifically, for example, the signal processing portion 18 separates the TS generated by the broadcast reception portion 17 into TS packets. Then, the signal processing portion 18 recombines the TS packets so as to generate a sound/image PES.

Then, the signal processing portion 18 combines the PES so as to generate an elementary stream (ES) that is an encoded sound/image data. Further, the signal processing portion 18 decodes the ES and converts the same into various digital signals. The digital signal obtained by decoding is given to the HDD 15 when it is recorded.
In addition, when the digital signal is output to the display 2 or the like, it is given to the external connection terminal 21.

The OSD processing portion 19 is a functional portion for generating an image signal. The OSD processing portion 19 converts information to be output from the HDD recorder 1 into image data that can be visually recognized by the user, and generates an image signal for displaying the converted image data on the display 2. The generated image signal is output from the external connection terminal 21.

The communication I/F 20 is a physical interface for connecting the HDD recorder 1 to a communication network. The communication I/F 20 is constituted so as to include, for example, a LAN cable connector for connecting to a wired LAN according to IEEE 802.3 standard or a radio antenna for connecting to a wireless LAN according to IEEE802.11 standard. Note that the communication I/F 20 may include an analog connection terminal for connecting to a telephone communication network or an ISDN connection terminal for connecting to an ISDN communication network.

The external connection terminal 21 is an interface constituted of a plurality of input and output terminals including, for example, a high definition multimedia interface (HDMI) terminal or a universal serial bus (USB) terminal. The external connection terminal 21 uses these input and output terminals for connecting the HDD recorder 1 to an external device such as the display 2 so that the digital signal or the analog signal is input and output.

The display 2 is a display device including a display portion, an operation portion, a control portion, and a connection portion, which are not shown in the diagram. For instance, the display 2 accepts digital signals including image and sound signals via an HDMI cable connected to the HDMI terminal included in the connection portion. Then, the display 2 combines the digital signals and outputs images and sound.

The broadband router 3 is a network relay device for connecting a plurality of IP networks to each other. Specifically, the broadband router 3 analyzes protocols of the network layer (third layer), the transport layer (fourth layer), and the like of the Open Systems Interconnection (OSI) reference model. In this way, two IP networks of the wired LAN and the Internet are connected to each other, for example.

### (2. Structure of functional portions)

Here, a relationship of individual functional portions of the HDD recorder 1 according to the embodiment of the present invention to perform an acquisition and reproduction process of the present invention is described with reference to a block diagram of Fig. 1. Note that broken lines with arrow in Fig. 1 indicate flows of control signals.

As illustrated in Fig. 1, the acquisition and reproduction process of the present invention is performed by the EPG acquiring portion 11a (namely, the electronic program guide acquiring portion), a communication control portion 11b (namely, the communication portion), a title acquiring portion 11c, and the content acquiring portion 11d (namely, the reproduction information acquiring portion) of the control portion 11.

The EPG acquiring portion 11a analyzes PSI/SI obtained from the TS by the signal processing portion 18 so as to acquire content information for displaying EPG. Then, the EPG acquiring portion 11a stores the acquired content information in the HDD 15 or the like. Alternatively, the EPG acquiring portion 11a may use the external connection terminal 20 so as to acquire the content information from an information processing apparatus or the like connected to the communication network.

Specifically, for example, the EPG acquiring portion 11a acquires content information such as a content name, broadcast date and time, broadcast content, and the like contained in an Event Information Table (EIT) as one type of the PSI/SI. Alternatively, the EPG acquiring portion 11a may acquire the content information by utilizing a content information delivery service such as G-GUIDE provided by a predetermined communication provider.

The communication control portion 11b performs communication control for performing interactive communication with an external device connected via the communication I/F 20, for example, with a content server, an information delivery server, or the like. Thus, it is possible to acquire various information and contents, and to perform transmission and reception of electronic mail. In addition, if the communication I/F 20 is equipped with a radio antenna, the communication control portion 11b also has a role of controlling wireless communication via a wireless communication network.

The title acquiring portion 11c monitors whether or not the user performs a specific key operation when contents are being reproduced or recorded. Note that the reproduction mentioned here may be reproduction of contents obtained by receiving a broadcast wave, may be reproduction of contents recorded in the HDD 15, or may be reproduction of contents recorded in a DVD or the like that can be accessed by the optical disc drive 16.

As the specific key operation, for example, if a search button disposed to the remote controller device included in the operation portion 13 is pressed, it is regarded that the specific key operation is performed. When the search button is pressed, title information indicating a program name or a title of the contents as the target of the searching is acquired.

As a method of acquiring the title information, if contents obtained from the broadcast wave is being reproduced, for example, the content information acquired by the EPG acquiring portion 11a is used for acquiring the title information. Alternatively, if contents obtained from the DVD are being reproduced, management data recorded in a management data area of the DVD is used for acquiring the title information.

Note that when the title information is acquired from the content information, the content information that is acquired in advance by the EPG acquiring portion 11a and is recorded in the HDD 15 or the like may be used. Alternatively, it is possible to newly acquire the content information by the EPG acquiring portion 11a when the search button is pressed.

The content acquiring portion 11d searches contents list of a contents service provider (CSP) by suing the title distinguished by the title acquiring portion 11c as a search key. Note that a connection destination of the CSP accessed by the content acquiring portion 11d is registered in advance by user setting or the like.

Note that as for setting of an access destination, it is possible to register a plurality of charged or free CSPs. In this case, it is possible to search for free CSPs with priority or to search for higher image quality CSPs with priority.

After obtaining the search result, the content acquiring portion 11d outputs the search result onto the screen. Specifically, the content acquiring portion 11d controls the OSD processing portion 19 to generate an image signal for displaying the image indicating the search result. Then, the content acquiring portions 11d outputs the generated image signal to the display 2 via the external connection terminal 21. Thus, a confirmation screen 200 is displayed on the display 2.

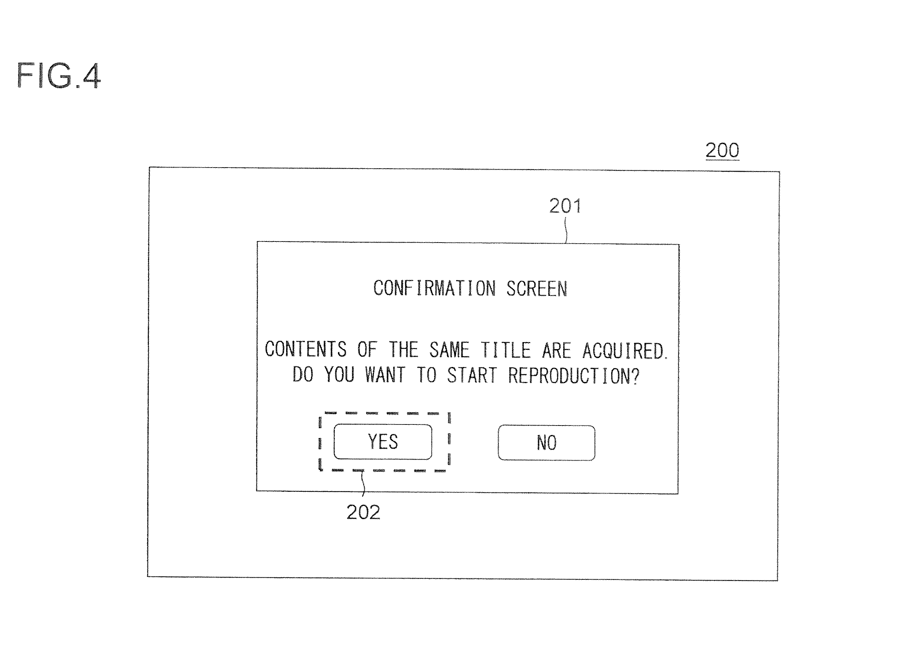

Fig. 4 illustrates an example of the confirmation screen 200 indicating the search result. As illustrated in Fig. 4, the confirmation screen 200 includes a message window 201 and a cursor 202. The user moves the cursor 202 by using the operation portion 13, so as to select a "YES" button or a "NO" button in the message window 201.

If a decision button (not shown) of the operation portion 13 is pressed in a state where the cursor 202 points the "YES" button, the content acquiring portion 11d controls the communication I/F 20 and the signal processing portion 18 to acquire the retrieved contents from the CSP and to reproduce the same (for example, to reproduce streaming).

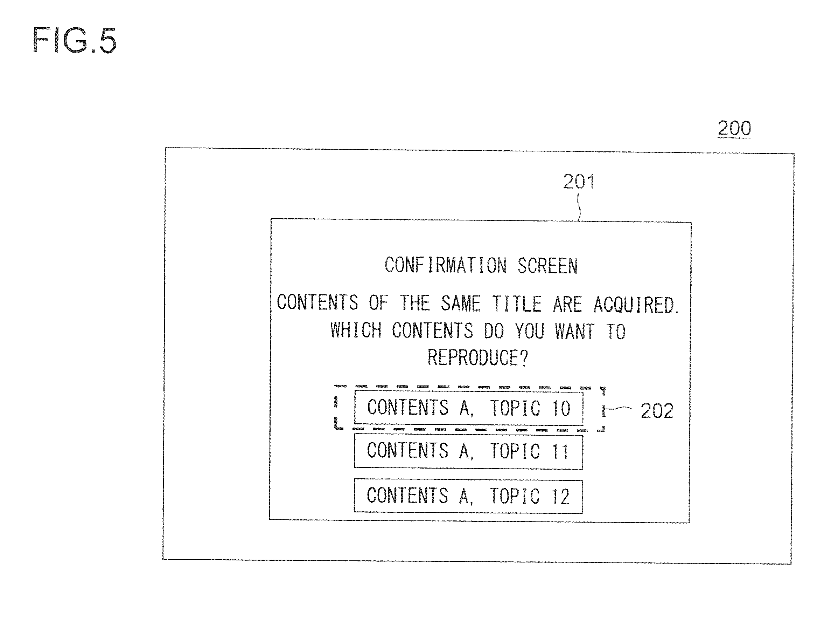

In addition, Fig. 5 illustrates an example of the confirmation screen 200 in a case where a plurality of contents succeeded in retrieval. As illustrated in Fig. 5, the confirmation screen 200 in this state displays a list of a plurality of retrieved contents in the message window 201. Fig. 5 illustrates an example where three topics form Topic 10 to Topic 12 of contents of a title "Contents A" are retrieved.

In the confirmation screen 200 of the state illustrated in Fig. 5, the user moves the cursor 202 by using the operation portion 13 and presses the decision button so as to select contents to be acquired and reproduced from a plurality of contents.

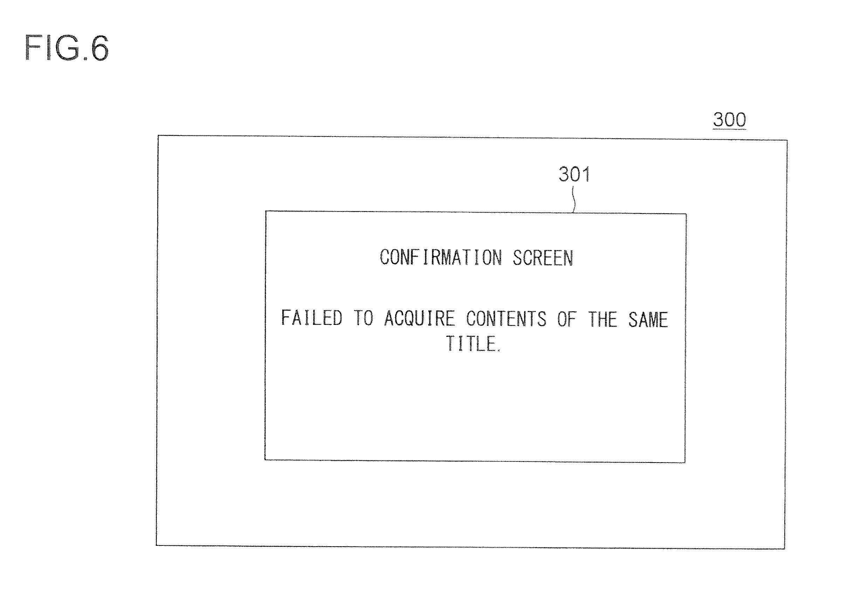

In addition, Fig. 6 illustrates an example of a confirmation screen 300 in a case where the retrieval is failed. As illustrated in Fig. 6, only a message window 301 is displayed on the confirmation screen 300.

Note that in the case where the retrieval of contents is succeeded, it is possible to adopt a structure in which the content acquiring portion 11d controls the signal processing portion 18 to automatically reproduce the retrieved contents without displaying the above-mentioned confirmation screen 200.

In addition, it is possible to adopt a structure in which if there are a plurality of retrieved contents, management information indicating details of individual contents is acquired so that the contents to be automatically reproduced is determined based on the management information. For instance, if the management information contains information indicating the number of topics in the contents, contents having a similar number of topics are acquired and automatically reproduced.

### (3. Acquisition and reproduction process)

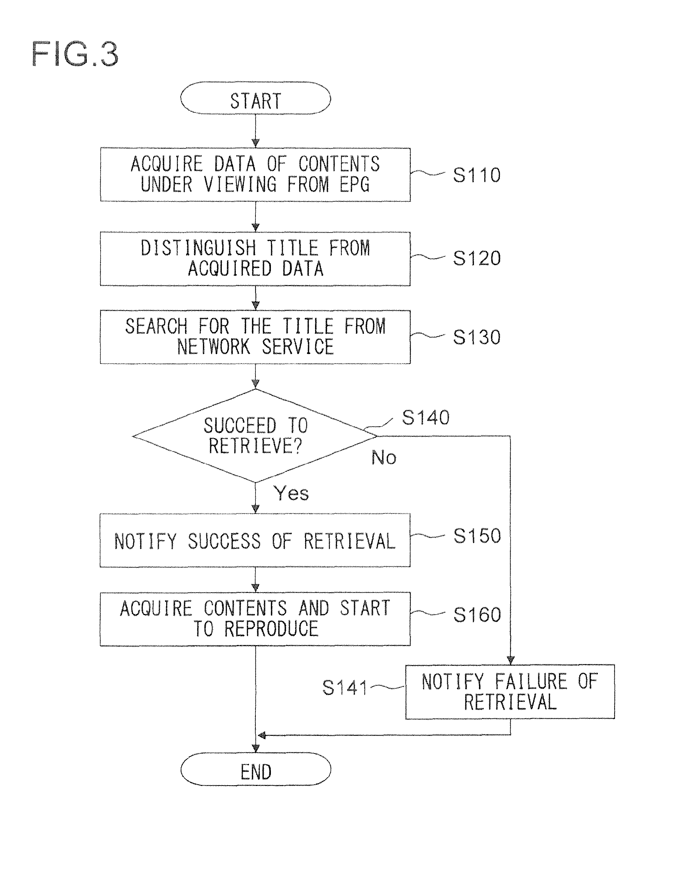

Here, an acquisition and reproduction process of the present invention performed by the HDD recorder 1 according to an embodiment of the present invention is described with reference to a flowchart of Fig. 3. The process illustrated in Fig. 3 is started when it is detected that a predetermined key (for example, a search key) of the remote controller device included in the operation portion 13 is pressed in a state where the user is viewing contents contained in the broadcast wave.

After the process is started, in Step S110, the title acquiring portion 11c acquires data about contents that is being viewed by the user, for example, the content information from the EPG acquired by the EPG acquiring portion 11a.

Next, in Step S120, the title acquiring portion 11c distinguishes a title of contents under viewing from the acquired data. Note that the title distinguished here may be a title of contents (for example, a title of a movie), or may be a name of a broadcasting program that broadcasts the contents (for example, "Night road show").

Next, in Step S130, the content acquiring portion 11d searches for contents having the same title as the distinguished title or contents containing the distinguished title from a predetermined network service (for example, the CSP). Then, in Step S140, the process is branched based on whether or not the retrieval is succeeded.

If the retrieval is failed, the content acquiring portion 11d displays the confirmation screen 300 indicating the failure in retrieval in Step S141. If the retrieval is succeeded, the content acquiring portion 11d displays the confirmation screen 200 illustrated in Fig. 4 or 5 in Step S150. Then, the content acquiring portion 11d waits for an instruction of whether or not to acquire and reproduce the contents.

If the instruction to acquire and reproduce the contents is detected, or if automatic reproduction is set in advance by user setting or the like, the content acquiring portion 11d controls the communication control portion 11b and the signal processing portion 18 to acquire and reproduce the retrieved contents (for example, to reproduce the streaming) in Step S160. When the reproduction is started in this way, the process is finished.

According to this embodiment described above, if the user is viewing the contents, and if the viewing is started from middle of the broadcasting program, the user can acquire the contents of the same title from the network service and start viewing of the contents from the beginning only by pressing the search key included in the operation portion 13. In addition, if the contents are broadcast in a plurality of times like a drama, it is possible to quickly obtain contents of a topic different from that under viewing from the network service and view the same.

### [Other embodiments]

The present invention is described above with reference to the preferred embodiment and example, but the present invention is not necessarily limited to the embodiment and can be embodied with various modifications within the scope of the technical concept thereof.

Therefore, the present invention can be applied to the following forms.

A) In the embodiment described above, the HDD recorder 1 is exemplified as an example of the image sound apparatus of the present invention. However, the present invention may be embodied in other device as the image sound apparatus that needs a start-up process. For instance, it is possible to adopt a structure of using a television apparatus, a DVD recorder, or the like.

(B) In the embodiment described above, the individual functional portions related to the acquisition and reproduction process of the present invention are realized by executing the program on the processing unit such as the microprocessor. However, it is possible that the individual functional portions are realized by a plurality of circuits.

(C) In the embodiment described above, content information about the contents under viewing is obtained by the EPG in Step S110. However, it is possible to acquire the content information by other method. For instance, it is possible that the communication portion control portion 11b acquires content information from a predetermined information processing apparatus connected to the communication network.

(D) In the embodiment described above, the process flow of Fig. 3 is performed when a predetermined key (the search key) is pressed in the state where the user is viewing contents contained in the broadcast wave. However, it is possible to perform the process flow of Fig. 3 when the predetermined key is pressed in a state other than the above-mentioned state. As an example of the state, for example, there is a state where recording process is being performed, a state where contents recorded in the HDD 15 is being reproduced, or a state where a DVD set in the optical disc drive 16 is being reproduced. Thus, in the case where record data have noise because of a bad reception when recording is performed, and hence it is difficult to view the contents, for example, it is possible to acquire the contents of the same title from the network and to view the contents. In addition, in the case where a predetermined key is pressed during recording so that content information and contents are acquired, for example, the user can view the contents from the beginning without waiting completion of the recording.

(E) In the embodiment described above, the acquisition and reproduction process of similar or related contents is performed with respect to the contents delivered by a digital television broadcast. However, it is possible to perform the acquisition and reproduction process of similar or related data with respect to the contents contained not in the digital television broadcast but in the optical disc.

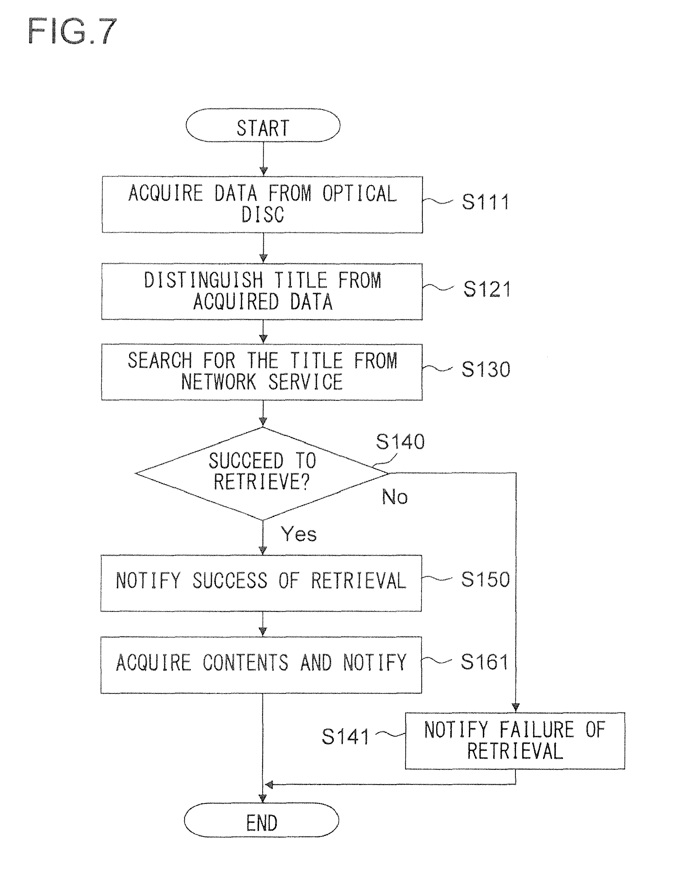

Details of the embodiment described above is described with reference to a flowchart of Fig. 7. Note that in Fig. 7, the process similar to the flowchart of Fig. 3 is denoted by the same step number so that description thereof is omitted. In addition, a DVD-ROM and a Blu-ray Disc (BD)-ROM are exemplified as the optical disc in the following description.

The title acquiring portion 11c of this embodiment acquires a contents name or an optical disc title from information defined by Universal Disk Format (UDF) that is a file system for optical discs.

The UDF includes some versions. For instance, UDF 1.02 is used for a DVD-ROM, and UDF 2.5 is used for a BD-ROM. In a data structure defined by the UDF standard, there is a data storage area named Logical Volume Identifier.

For instance, according to "Universal Disk Format Specification Revision 2.50" as a standard code of the UDF 2.5, this area is a 128 byte area for storing a variable-length character string. Note that the Logical Volume Identifier is both in the UDF 1.02 and in the UDF 2.5.

The title acquiring portion 11c of this embodiment reads the optical disc (not shown) set in the optical disc drive 16 in Step S111 of Fig. 7. Then, the Logical Volume Identifier recorded in the optical disc is referred to, and hence the character string data is acquired. Further in Step S121, a name of the contents under reproduction or a title of the optical disc is distinguished from the acquired character string data.

Next, in Steps S130 to S150, the content acquiring portion 11d acquires contents related to the character string data acquired from the optical disc. For instance, it is supposed that Topic 1 to Topic 5 of "Drama A" are recorded in the optical disc. Then, it is checked by the content acquiring portion 11d and the communication control portion 11b whether or not contents of Topic 6 and following topics of "Drama A" are delivered via the network.

Next, in Step S161, the content acquiring portion 11d records related contents acquired via the network in the HDD 15 and controls the OSD processing portion 19 to output a notification image indicating that acquisition of the related contents is succeeded. Thus, the user is informed of the success of acquisition. Note that it is possible to adopt a structure of waiting for a user's selection operation with the display of the notification image, including an image for selection of whether or not to perform reproduction of the acquired related contents.

In addition, the information acquired via the network is not limited to related contents containing images and sound. It is possible to acquire market information related to the optical disc from an electronic market on the network. For instance, if "Movie B" is recorded in the optical disc, it is possible to search for goods or books related to the "Movie B" from the character string data acquired in Step S111 and to inform the user about the same.

In addition, the method of acquiring the title from the optical disc by the title acquiring portion 11c is not limited to the method of referring to the Logical Volume Identifier defined by the UDF. For instance, it is possible to refer to a predetermined data area defined by other disc format. Alternatively, it is possible to refer to meta data assigned to digital data such as MPEG data.

According to this embodiment described above, a user having a commercially available optical disc can easily view contents related to the optical disc, such as the continuation or contents of a different topic. In addition, the user can easily search for and purchase goods or books related to the optical disc from an electronic market on the network.

## Claims

1. An image sound apparatus, comprising:
a reproduction processing portion which performs a reproduction process of reproduction information containing images or sound;
a title acquiring portion which acquires a title of the reproduction information;
a communication portion configured to connect to a communication network so as to perform communication;
an operation portion which accepts an operation instruction; and
a reproduction information acquiring portion which acquires, when a predetermined operation to the operation portion is detected in a state where the reproduction processing portion is performing the reproduction process, the title of the reproduction information by the title acquiring portion, and acquires reproduction information having a title that is partially or completely the same as the acquired title, from a communication network using the communication portion.

2. The image sound apparatus according to claim 1, **characterized in that** when a predetermined operation to the operation portion is detected in a state where the reproduction processing portion is performing the reproduction process, the reproduction information acquiring portion acquires the title of the reproduction information by the title acquiring portion, and acquires reproduction information having a title that is partially or completely the same as the acquired title and having different management information from that of the reproduction information, from a communication network using the communication portion.

3. The image sound apparatus according to claim 2, **characterized in that** the reproduction information acquiring portion uses information as the management information, indicating the number of topics of the reproduction information, a subtitle of the reproduction information, or broadcast date and time of the reproduction information.

4. An image sound apparatus according to claim 3, **characterized in that** when acquisition of the reproduction information is succeeded, the reproduction information acquiring portion controls the reproduction processing portion to perform automatic reproduction of the acquired reproduction information, or accepts selection of whether or not to reproduce the acquired reproduction information from the operation portion so as to control the reproduction processing portion to reproduce the reproduction information when the reproduction is selected.

5. An image sound apparatus according to claim 4, further comprising a broadcast reception portion for receiving a broadcast wave so as to acquire the reproduction information from the broadcast wave, **characterized in that**
when a predetermined operation to the operation portion is detected in a state where the broadcast reception portion is acquiring the reproduction information, the reproduction information acquiring portion acquires the title of the reproduction information from the title acquiring portion and acquires reproduction information having a title that is partially or completely the same as the acquired title, from a communication network using the communication portion.

6. An image sound apparatus according to claim 5, further comprising a recording portion for recording the reproduction information, **characterized in that**
when a predetermined operation to the operation portion is detected in a state where a recording process of the reproduction information to the recording portion is performed, the reproduction information acquiring portion acquires the title of the reproduction information from the title acquiring portion and acquires reproduction information having a title that is partially or completely the same as the acquired title, from a communication network using the communication portion.

7. An image sound apparatus according to claim 6, **characterized in that**
when a predetermizaed operation to the operation portion is detected in a state where a recording process of the reproduction information to the recording portion is performed, the reproduction information acquiring portion acquires the title of the reproduction information from the title acquiring portion and acquires reproduction information having a title that is partially or completely the same as the acquired title, from a communication network using the communication portion.

8. An image sound apparatus according to claim 7, **characterized in that** the reproduction information acquiring portion uses the communication portion for connecting to an information delivery system delivering the reproduction information via a wide area communication network, so as to acquire the reproduction information.

9. An image sound apparatus according to claim 8, further comprising an electronic program guide acquiring portion which acquires an electronic program guide, **characterized in that**
the title information acquiring portion uses the electronic program guide so as to acquire the title information.

10. An image sound apparatus according to claim 9, **characterized in that** the title information acquiring portion uses the communication portion so as to acquire the title information from an information processing apparatus configured to connect to the communication network.

11. An image sound apparatus, comprising:
a reproduction processing portion which performs a reproduction process of reproduction information containing images or sound recorded in an optical disc;
a title acquiring portion which acquires the title of the reproduction information from the optical disc;
a communication portion configured to connect to a communication network so as to perform communication;
an operation portion which accepts an operation instruction; and
a reproduction information acquiring portion which, when a predetermined operation to the operation portion is detected, acquires the title of the reproduction information recorded in the optical disc from the title acquiring portion, and acquires information having a name that is partially or completely the same as the acquired title, from a communication network using the communication portion.

12. An image sound apparatus according to claim 11, **characterized in that**
the reproduction information acquiring portion acquires information having a name that is partially or completely the same as the title acquired by the title acquiring portion and having different management information from a communication network using the communication portion, and
the reproduction information acquiring portion uses information as the management information, indicating the number of topics of the reproduction information, a subtitle of the reproduction information, or broadcast date and time of the reproduction information.

13. An image sound apparatus according to claim 12, **characterized in that** when acquisition of the information is succeeded, the reproduction information acquiring portion makes notification indicating the acquired information, accepts a selection of whether or not to reproduce the acquired information from the operation portion, and controls the reproduction processing portion to reproduce the information if the reproduction is selected.
